# EUROPEAN PATENT SPECIFICATION

(11) **EP 1 523 250 B1**
(45) Date of publication and mention of the grant of the patent: **18.04.2007**
(21) Application number: 03735936.1
(22) Date of filing: 09.07.2003
(51) Int. Cl.: A23L 3/3418, B65B 55/10, B65B 55/18, B65B 31/02, B65B 31/04

(54) **PROCEDURE FOR THE TREATMENT OF PACKAGED AGRICULTURAL FOOD PRODUCTS**
VERFAHREN ZUR BEKÄMPFUNG VON SCHÄDLINGEN IN LANDWIRTSCHAFTLICHEN VERPACKTEN LEBENSMITTELN
PROCEDE DE TRAITEMENT DE PRODUITS ALIMENTAIRES AGRICOLES EMBALLES

(30) Priority: 18.07.2002 ES 200201683
(43) Date of publication of application: 20.04.2005
(73) Proprietor: SOCIEDAD ESPANOLA DE CARBUROS METALICOS S.A., 08193 Bellaterra (ES)
(72) Inventor: SANCHEZ MOLINO, Francisco, Javier, 08850 GAVA (ES); ALOMAR KURZ, Oscar, 08348 CABRILS (ES); RIUDAVETS MUNOZ, Jordi, 08348 CABRILS (ES); GABARRA AMBERT, Rosa, 08348 CABRILS (ES)
(74) Representative: Ponti Sales, Adelaida
(86) International application number: PCT/IB2003/002771
(87) International publication number: WO 2004/008886

(56) References cited:
- EP-A- 0 628 259
- DE-A- 3 832 390
- US-A- 4 384 972
- US-A- 6 063 418

## Description

### FIELD OF THE INVENTION

This invention relates to a procedure for the treatment of packaged agricultural food products by means of treating such packaged agricultural food products with a mixture of CO₂/O₂.

This procedure permits eradication of a specific plague of insects and mites independently of the stage of developments those insects and mites are in.

### BACKGROUND OF THE INVENTION

There exist in the state of the art many documents which describe the effect of CO₂ on insects. (Gerard Nicolas, Daniel Sillans, "Immediate and latent effects of carbon dioxide on insects", *Ann. Rev. Entomol. 1989, 34:94-116).* The harmful effect of CO₂ on insects is therefore known.

Also known is the use of CO₂ to eradicate insects. Indeed, there exist many documents which describe procedures based on the use of carbon dioxide, to eradicate insects in agricultural food products (cereals, nuts, etc.).

However, most of these procedures are not effective for all stages of development of the insect, so that when agricultural food products are packaged, the insects reproduce again and a damaged, poor-quality product reaches the consumer.

There nevertheless exist documents in the state of the art which describe packages characterised in that their composition favours eradication with CO₂.

United States patent US 6063418 relates to a double bag: an inner bag made of a flexible material accommodated within a high-strength outer bag. Owing to CO₂ permeability (lower than 6300 cc/m²·24h·1atm) and oxygen-deficiency an insecticidal effect is achieved for several days, it being essential to keep the concentration of CO₂ at 40% for at least 7 days.

German patent DE 3832390 relates to a procedure for treating packaged products based on a first stage of exposure to vacuum and a second stage in which CO₂ is introduced at a pressure equal to or lower than 12 mbar. US-6,063,418 relates to a method for insect removal in packaged food by means of CO2 application.

There is nevertheless a need for a procedure for the treatment of packaged agricultural food products, based on the use of CO₂, which is simple, using a material (plastic bags) which is affordable (selected from the wide variety of bags that exist for packing agricultural food products) and that is characterised in that the packaged product resulted from the procedure is totally disinfected, with no possibility of insects in primary stages (such as eggs or larvae) remaining in the product.

The object of this invention is therefore a new procedure for the treatment of packaged agricultural food products that eradicates any insect at any stage of development so that the product reaches the consumer in optimum condition.

### DESCRIPTION OF THE INVENTION

This invention relates to a procedure for the treatment of packaged agricultural food products in which, following placement of the agricultural food product in a bag, the following stages are carried out:
(a) the gases CO₂ and O₂ are mixed, with the concentration of CO₂ equal to or exceeding 40% and the concentration of O₂ equal to or lower than 5%;
(b) the bag is filled with the mixture resulting from stage (a) by means of a scavenging operation or the creation of a vacuum inside the bag, setting up a pressure of 350 mbar inside the bag;
(c) the agricultural food product is exposed to the mixture of gases for a time that ranges between 4 and 26 days, in such a way that the concentration of CO₂ falls to 30% and the concentration of O₂ rises to 9%.
said procedure permitting the eradication of insects and/or mites at any stage of their development.

In this invention, "scavenging" is taken to mean displacing the air atmosphere inside the bag by introducing a current of the mixture of gases obtained in stage (a).

In this invention, the term "packaged agricultural food product" refers to a cultivated product or a product made therefrom.

In this invention, "eradication of insects and/or mites at any stage of development" means the elimination of insects and/or mites at any of the following stages of development: egg, larva or nymph, pupa and adult.

In this invention, the bag that contains the agricultural food product has a permeability to O₂ of 30 cm³/m²·24h·atm and a permeability to CO₂ of 150 cm³/m²·24h·atm at 23°C and 0% relative humidity.

Another advantageous aspect of this invention is therefore due to the fact that the characteristics of the bag used in the procedure of this invention are not restrictive, for this type of bag is affordable and a choice can be made between the large variety of bags for packaging agricultural food products.

As mentioned above, the procedure described in this invention permits the eradication of the insects and/or mites associated with the packaged agricultural food product, independently of the stage of development of said insects and/or mites, with the product reaching the consumer in an optimum condition for consumption and undamaged.

Another advantageous aspect of the procedure of this invention lies in the fact that the procedure is simple and low in cost, while the type of bag used for packaging is not an essential aspect for achieving the eradication.

### PREFERRED EMBODIMENT OF THE INVENTION

The insects and/or mites used in the trial described below come from bred insects/mites pertaining to all stages of development of each species.

The insectation was carried out in aerated plastic boxes (7.5 cm in diameter by 3 cm high) containing 20 g of the food substrate used normally for breeding/rearing these pests:

| PEST | BREEDING/REARING SUSBSTRATE |
|---|---|
| Insects | |
| Plodia Interpuctuella | Wheat bran + glycerine + beer yeast |
| Tribolium castaneum | Flour + beer yeast |
| Sitophilus oryzae | Rice |
| Acanthoscelides obtectus | Dry kidney beans |
| Lasioderma serricorne | Flour + beer yeast |

| Mites | |
|---|---|
| Tyrophagus putrescentiae | Wheat bran + beer yeast |

The boxes containing the insects at their different stages of development (eggs, larvae or nymphs, pupae and adults) were placed inside plastic bags (BB4L CRYOVAC) for subsequent creation of vacuum, in such a way that the concentration of O₂ inside the bag was equal to or lower than 5%.

In order to determine the efficacy of the procedure of the invention, the mixture of gases was made to pass through a saturated saline solution of potassium chloride. A situation was thus created in which the agricultural food product was moist (an adverse situation for eradicating the insects therein).

In brief, a mixture of CO₂ and O₂ gases was prepared using a WITT model KM 100-3M/MEM mixer. This mixture of gases, which comprised a CO₂ concentration higher than or equal to 40% and an O₂ concentration lower than or equal to 5% was made to pass through a saturated saline solution of potassium chloride, following which the mixture of gases was introduced into the bag at a pressure of 350 mbar and a sealed vacuum flask time of 1.5 seconds.

Finally, the real concentration of the gases that had entered the bag was checked by measuring the concentrations of the gases at the bag inlet and of the gas inside a test bag, using an ABISS model TOM 12 analyser.

Once the mixture of gases had been applied the bags were kept in a chamber under controlled conditions (25±1°C, 75±10% relative humidity, photoperiod 16L:8F).

Following the procedure described, it was found that the conditions that permitted eradication in an adverse situation such as having a moist agricultural food product, independently of the state of development, for the above-mentioned insects, were preferably:

| | **Exposure time** |
|---|---|
| | **(days)** |
| *P. interpunctella* | 3 - 14 |
| *T*. *castaneum* | 7 - 14 |
| *S. oryzae* | 10 - 24 |
| *A*. *obtectus* | 10 - 30 |
| *L. serricorne* | 10 - 14 |
| *T*. *putrescentiae* | 7 - 14 |

The exposure time depended on the resistance of each of the pests to the treatment.

Finally, after allowing an exposure time to elapse (as specified in the above table for each case), the concentration of CO₂ fell to 30% (where the initial concentration had been 40-60%) or to 70% (where the initial concentration of CO₂ had been 80-99%), while the concentration of O₂ rose to 9%.

## Claims

1. Procedure for the treatment of packaged agricultural food products, **characterised in that** following placement of the agricultural food product in a bag, the following stages are carried out:
a. the CO₂ and O₂ are mixed, with the concentration of CO₂ being equal to or higher than 40% and the concentration of O₂ equal to or lower than 5%;
b. the bag is filled with the mixture resulting from stage (a) by means of a scavenging operation or the creation of a vacuum inside the bag, setting up a pressure of 350 mbar inside the bag; and
c. the agricultural food product is exposed to the mixture of gases for a time that ranges between 4 and 26 days, in such a way that the concentration of CO₂ falls to 30% and the concentration of O₂ rises to 9%.
said procedure permitting the eradication of insects and/or mites at any stage of their development.

2. Procedure according to Claim 1, **characterised in that** said bag that contains the agricultural food product has a permeability to O₂ of 30 cm³/m²·24h·atm.

3. Procedure according to Claim 1 or 2, **characterised in that** said bag has a permeability to CO₂ of 150 cm³/m²·24h·atm.

4. Procedure according to Claim 1, **characterised in that** said insect is Plodia interpunctella.

5. Procedure according to Claim 1, **characterised in that** said insect is Tribolium castaneum.

6. Procedure according to Claim 1, **characterised in that** said insect is Sitophylus oryzae.

7. Procedure according to Claim 1, **characterised in that** said insect is Acanthoscelides obtectus.

8. Procedure according to Claim 1, **characterised in that** said insect is Lasioderma serricornae.

9. Procedure according to Claim 1, **characterised in that** said mite is Tyrophagus putrescentiae.

## Patentansprüche

1. Verfahren zur Behandlung von verpackten, landwirtschaftlichen Nahrungsmittelprodukten, **dadurch gekennzeichnet, dass** nach dem Einbringen des landwirtschaftlichen Nahrungsmittelprodukts in einen Sack die folgenden Schritte ausgeführt werden:
a. CO₂ und O₂ werden mit einer Konzentration von CO₂ von gleich oder höher als 40% und einer Konzentration von O₂ von gleich oder weniger als 5% vermischt;
b. Der Sack wir mit der Mischung, die aus Schritt (a) resultiert, mittels eines Spülarbeitsgangs oder mittels Erzeugens eines Vakuums innerhalb des Sacks gefüllt, wobei innerhalb des Sacks ein Druck von 350 mbar eingestellt wird; und
c. Das landwirtschaftliche Nahrungsmittelprodukt wird der Mischung von Gasen über einen Zeitraum, der zwischen 4 und 26 Tage reicht, in einer solchen Art und Weise ausgesetzt, dass die Konzentration von CO₂ auf 30% fällt und die Konzentration von O₂ auf 9% steigt,
wobei das Verfahren die Ausrottung von Insekten und/oder Milben in irgendeinen ihrer Entwicklungsstadien ermöglicht.

2. Verfahren gemäß Anspruch 1, **dadurch gekennzeichnet, dass** der Sack, der das landwirtschaftliche Nahrungsmittelprodukt enthält, eine Durchlässigkeit für O₂ von 30 cm³/m²·24h·atm besitzt.

3. Verfahren gemäß einem der Ansprüche 1 oder 2, **dadurch gekennzeichnet, dass** der Sack eine Durchlässigkeit für CO₂ von 150 cm³/m²·24h·atm besitzt.

4. Verfahren gemäß Anspruch 1, **dadurch gekennzeichnet, dass** das Insekt Plodia interpuctella ist.

5. Verfahren gemäß Anspruch 1, **dadurch gekennzeichnet, dass** das Insekt Tribolium castaneum ist.

6. Verfahren gemäß Anspruch 1, **dadurch gekennzeichnet, dass** das Insekt Sitophilus oryzae ist.

7. Verfahren gemäß Anspruch 1, **dadurch gekennzeichnet, dass** das Insekt Acanthoscelides obtectus ist.

8. Verfahren gemäß Anspruch 1, **dadurch gekennzeichnet, dass** das Insekt Lasioderma serricome ist.

9. Verfahren gemäß Anspruch 1, **dadurch gekennzeichnet, dass** das Insekt Tyrophagus putrescentiae ist.

## Revendications

1. Procédé pour le traitement de produits alimentaires agricoles emballés, **caractérisé en ce qu'**après l'introduction du produit alimentaire agricole dans un sac, les étapes suivantes sont effectuées;
a. le CO₂ et O₂ sont mélangés, la concentration en CO₂ étant égale ou supérieure à 40 % et la concentration en O₂ étant égale ou inférieure à 5 % ;
b. le sac est rempli avec le mélange résultant de l'étape (a) à l'aide d'une opération de purge ou la création d'un vide à l'intérieur du sac en établissant une pression de 350 mbars à l'intérieur du sac ; et
c. le produit alimentaire agricole est exposé au mélange de gaz pendant un temps allant de 4 à 26 jours, de telle façon que la concentration en CO₂ chute à 30 % et que la concentration en O₂ s'élève à 9 % ;
ledit procédé permettant l'éradication des insectes et/ou des acariens à n'importe quel stade de leur développement.

2. Procédé selon la revendication 1, **caractérisé en ce que** ledit sac qui contient le produit alimentaire agricole à une perméabilité à O₂ de 30 cm³/cm².24h.atm.

3. Procédé selon la revendication 1 ou 2, **caractérisé en ce que** ledit sac à une perméabilité à CO₂ de 150 cm³/m².24h.atm.

4. Procédé selon la revendication 1, **caractérisé en ce que** ledit insecte est Plodia interpunctella.

5. Procédé selon la revendication 1, **caractérisé en ce que** ledit insecte est Tribolium castaneum.

6. Procédé selon is revendication 1, **caractérisé en ce que** ledit insecte est Sitophylus oryzae.

7. Procédé selon la revendication 1, **caractérisé en ce que** ledit insecte est Acanthoscelides obtectus.

8. Procédé selon la revendication 1, **caractérisé en ce que** ledit insecte est Lasioderma sermécornae.

9. Procédé selon la revendication 1, **caractérisé en ce que** ledit acarien est Tyrophagus putrescentiae.
